(19)

**Europäisches Patentamt**

**European Patent Office**

**Office européen des brevets**

(11)　**EP 2 743 865 B1**

(12)　**EUROPEAN PATENT SPECIFICATION**

(45) Date of publication and mention
of the grant of the patent:
**12.06.2019  Bulletin 2019/24**

(51) Int Cl.:
*G06K 19/077* (2006.01)　　*G06K 7/00* (2006.01)

(21) Application number: **12382492.2**

(22) Date of filing: **11.12.2012**

(54) **RFID tag, system and method for identification of samples at cryogenic temperatures**

RFID-Etikett, System und Verfahren zur Identifizierung von Proben bei Tieftemperaturen

Étiquette RFID, système et procédé d'identification d'échantillons à des températures cryogéniques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.06.2014  Bulletin 2014/25**

(73) Proprietor: **Incide, S.a.**
**20018 Donostia (san Sebastian) (ES)**

(72) Inventors:
• **Hernández de Miguel, Javier**
  **20018 Donostia (San Sebastián) (ES)**
• **Martínez Antón, César**
  **20018 Donostia (San Sebastián) (ES)**

• **Zatorre Navarro, Guillermo**
  **20018 Donostia (San Sebastián) (ES)**
• **Egurrola López, Daniel**
  **20018 Donostia (San Sebastián) (ES)**
• **Ortiz de Landaluce, María**
  **20018 Donostia (San Sebastián) (ES)**
• **Fernández Gascón, Sergio**
  **20018 Donostia (San Sebastián) (ES)**

(74) Representative: **Stiebe, Lars Magnus et al
Balder
Paseo de la Castellana 93, 5
28046 Madrid (ES)**

(56) References cited:
**WO-A1-2005/109332**　　**WO-A2-2008/065127**
**US-A1- 2005 247 782**

EP 2 743 865 B1

**Description**

**TECHNICAL FIELD**

The present invention relates to electronic identification of biological samples at cryogenic temperatures and, in particular, to safe identification of samples stored in thin vessels at such temperatures.

**STATE OF THE ART**

Biological samples, including samples for in-vitro fertilization, are often stored for long-time conservation in vessels at temperatures that stop all life processes, namely below -130ºC. One popular type of thin biological vessel is called straw. Straws have been used for a number of years and are for instance described in patent application US5545562.

To accomplish such long-time conservation and at such temperatures, the straws can be submerged in liquid nitrogen in special containers, which results in a storage temperature as low as -196ºC. These straws are normally welded at both ends in order to isolate their content and prevent any contamination. Straws are usually stored inside containers called "goblets"; each goblet can contain more than 200 straws inside.

In those circumstances, most current straws are identified by means of a sheath placed around the straw, as described for example in already cited US5545562. The sheath contains a human readable code and/or a bar code. Reading of bar codes can be automated by using an electronic bar code reader.

Electronic bar code identification has a number of advantages, such as to ease the task of identifying a sample among a number of other samples kept in cryogenic conditions and to avoid mistakes due to human errors when reading the human readable code. Nevertheless, electronic bar code identification has a number of disadvantages. In order to read the bar-code or label to identify each sample within a vessel, the removal, at least partially, of the vessel from the liquid nitrogen environment is mandatory. When taken out of the cooling liquid, even if they are still surrounded by nitrogen vapor, the straws are usually affected by strong temperature variations. Taking into account the small dimensions of the straws and the reduced quantities of biological samples that they contain, these large temperature gradients may cause brutal heating of the vessel. This often leads to a diminished quality of the biological material. This problem is made worse due to the generation of ice around the straw, which makes the reading of such codes by visual or automatic means very time consuming.

Electronic identification can also be done by means of the technology called Radio Frequency Identification (RFID). RFID has a number of advantages, such as to allow identification of the samples while being submerged inside the liquid nitrogen, to allow faster identification of the samples to be extracted, because of the faster procedure and because it is possible to read in spite of the presence of ice, and to allow the possibility to write information inside the tag (Read/Write devices).

RFID tags aiming to provide a solution for this application need to be operative in the complete temperature range, from ambient temperature down to -200ºC. Operation at -196ºC is necessary to identify and audit straws immersed in liquid nitrogen, while operation at ambient temperature is mandatory to validate that the sample extracted is the right one, prior to its use.

The freezing of biological samples is a complex thermodinamical process. Therefore, the added RFID tag must influence as little as possible the cryogenic process of the biological sample. There are 2 types of straws, each of them with different requirements in terms of identification.

Conventional straws have been used for several years. Such straws and their identification are for example described in patent application US5545562. This identification relies on a human readable code and a bar code printed on a sheath which is fitted around the straw. Straws are filled in using vacuum techniques, as described for example in patent application US5283170. To identify these straws, it is possible to place RFID tags inside the straw or around the straw. When RFID tags inside conventional straws are used to identify them, it is desired that the section of the RFID tag is smaller than the section of the inner part of the straw, in order to allow the vacuum to be properly created. One advantage of internal identification is that it does not alter the number of straws which can be placed inside a goblet.

Lately, a new type of straws called "open-pulled straws" is widely used in the market. These straws are designed to be used under a different cryogenic process, called "vitrification". The key aspect is that such straws are frozen very rapidly. Not to modify the thermal process of the sample is therefore a must. To allow this very rapid freezing process it is necessary to maximize the heat transfer between the liquid nitrogen, and this is achieved by keeping the thickness of the elements between the sample and the liquid nitrogen to the minimum. In this respect, it is recommended not to use a sheath-based identification system which enlarges the thickness of the material in order not to interfere with the cryogenic process. RFID tags around the straw are in the best case as thick as conventional sheaths (without RFID), and they influence the heat transfer. It is therefore recommended to place the RFID tag inside the straw. Open-pulled straws are not filled in using vacuum techniques. The RFID tag is therefore allowed to occupy the complete inner space of the straw.

To provide an overall view of the storage system for cryo-preservation, straws are placed inside goblets, which are placed inside canisters. Several canisters are placed inside a Dewar, which is a specific metallic container to hold liquid nitrogen.

Another popular type of biological vessels is called vial. Vials are manufactured in a number of different sizes, depending on the volume of biological material which is to be stored inside. There are commercial vials for volumes as small as 0.1ml, having an internal diameter of 3.6mm. Vials are usually placed in boxes of around 100 units. Several boxes are placed in a rack. Several racks can be placed in a cabinet (for preservation at -80ºC) or Dewar container (for preservation in liquid nitrogen). Due to the existence of different vials inside the box, an anti-collision protocol is mandatory. RFID tags can also be used to identify boxes and racks, using the same anti-collision protocol.

Radio frequency identification (RFID) systems are used in different fields, such as process automation (for instance, in the automotive industry), access control, stock control and audit, animal identification, public transport and many others. The RFID identification system usually comprises an interrogator unit (also called reader unit), which is able to wirelessly exchange information with the individual RFID tags. Individual RFID tags contain means to communicate with the reader and a non-volatile memory containing the unique identifier of the tag. By attaching the RFID tag to the element to be identified its identification is permitted. In comparison to other competitive technologies such as bar codes, RFID systems provide several advantages. For example, line-of-sight is not needed to successfully identify the tags; besides several RFID tags can be read simultaneously by the same reader provided they are inside the reader field. This procedure to simultaneously identify tags is called anti-collision protocol. The capability to support anti-collision protocols is normally built in the RFID tag and the RFID reader.

Conventional RFID tags operate at different standard frequencies, mainly 125 kHz, 13.56 MHz, 868/902 MHz and 2.4 GHz. Tags operating at each of these frequencies have respective advantages and disadvantages.

Tags at 125 kHz are widely used in applications where liquids are involved and where metals are close to the tags. Nevertheless, this frequency band implies important drawbacks for the identification of straws. First, tags operating at 125 kHz have been reported to interfere with medical equipment in different studies, as a consequence of which their use is not recommended in hospitals. Second, the anti-collision protocols implemented in 125 kHz tags are usually slow; the identification of all tags within the interrogation field might therefore take too long. Finally, these tags need inductance values for the antennas in the range of mH; since the inductance is proportional to the number of turns, the size and mass of such tags are bigger than the size and mass of tags at other frequencies.

Signals operating at 2.4 GHz are strongly damped in liquid environments. They do not operate correctly in proximity to metal environments.

Signals operating at 13.56 MHz are also adversely affected in the proximity of metallic parts, as acknowledged for example in European patent application EP2315163A1, wherein use of RFID chips at 13.56 MHz is discouraged. Additionally, a higher operating frequency means higher attenuation of the signal in an absorptive environment such as liquid; therefore, higher attenuation in liquid is expected than for 125kHz.

868 MHz signals are also strongly damped in liquid environments. Besides, they have also been reported to interfere with medical equipments. Furthermore, in the proximity of metal, operation of tags at 868 MHz is defective.

Next conventional proposals to identify biological samples with RFID systems are summarized. Patent application US2007/0075141 refers to sample containers with RFID tags. In particular, it describes wells, microscope slides, retainers with sealing caps and tubes. No reference is made to how to handle the problem of RFID operation at cryogenic temperatures.

EP2315163A1 refers to cryogenic vessels, such as straws. It describes the operation of RFID tags at cryogenic temperatures, and in particular in liquid nitrogen. A chip which operates at 125 kHz is proposed. The chip is encapsulated in plastic material in order to provide protection against cryogenic operation and to provide mechanical protection for the tag. Tags operating at 13.56 MHz are discouraged due to more difficult operating conditions in the proximity of metal.

United States patent application US2005/247782 A1 discloses miniature RFID-tags for the identification of vials which are capable of working in cryogenic conditions.

International patent application WO2008/065127 A2 describes a miniature transponder having a ferrite rod with a coil wound around it.

## DESCRIPTION OF THE INVENTION

It is an object of the present invention to provide a radio-frequency identification (RFID) tag designed to fit inside a thin vessel, the RFID tag being capable of operating at cryogenic temperatures.

According to an aspect of the present invention, there is provided a radio-frequency identification tag for identification of cryo-preserved samples down to cryogenic temperatures, comprising an antenna and an integrated circuit chip designed to be operative at cryogenic temperatures. The antenna is formed by a coil wound around a ferrite core. The radio-frequency identification tag is configured to fit within a vessel having a diameter down to 1.4mm.

The RFID tag comprises a carrier for holding the antenna and the integrated circuit chip. In a particular embodiment, the carrier is a polymeric material molded around the antenna and the integrated circuit chip. Alternatively, the carrier is made of a glass material configured to encapsulate the antenna and the integrated circuit chip.

In a particular embodiment, the carrier has the shape of a prism.

Preferably, the RFID tag is configured to operate in the frequency band of 13.56 MHz.

In a preferred embodiment, the ferrite core is based on a MnZn material.

In a particular embodiment, the integrated circuit chip is in die format.

In a particular embodiment, the integrated circuit chip comprises a plurality of bumped pads, each of them having a size which allows direct soldering of the antenna to the bumped pads.

In a particular embodiment, the RFID tag comprises means to implement an anti-collision protocol configured to enable a receiving means to discriminate between a plurality of discrete radio-frequency identification tags.

In a particular embodiment, the RFID tag is capable of operating at temperatures down to -200ºC.

According to an aspect of the present invention, the operating frequency of the RFID tag is tunable by shifting said wound coil along the longitudinal axis of the ferrite core, until either its resonant frequency substantially matches up with a target resonant frequency or the energy received at a receiving means tuned to a target frequency is maximized. According to another aspect of the present invention, there is provided a system for identification of cryo-preserved samples at cryogenic temperatures. The system comprises a plurality of vessels for containing samples, each vessel having in its inside an RFID tag of the type already described; means to activate those RFID tags kept within the vessels; receiving means to identify signals from those RFID tags, comprising an anti-collision protocol to enable the receiving means to discriminate between discrete vessels.

In a particular embodiment, each of the vessels has a diameter down to 1.4mm.

In a particular embodiment, the vessels are straws.

Finally, another aspect of the invention relates to a method of tuning a radio-frequency identification tag for identification of a cryo-preserved sample stored in a vessel at cryogenic temperatures, wherein said radio-frequency identification tag in turn comprises an antenna formed by a coil wound around a ferrite core. The method comprises shifting the windings of the wound coil along the axis of the ferrite core, until either its resonant frequency substantially matches up with a target resonant frequency or the energy received at a receiving means tuned to a target frequency is maximized. Additional advantages and features of the invention will become apparent from the detail description that follows and will be particularly pointed out in the appended. According to the present invention, there is provided a radio-frequency identification tag, a radio-frequency identification system and a radio-frequency tuning method according to claims 1, 11 and 14. Preferred embodiments are defined in dependent claims 2-10, 12 and 13.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows a section and a top view of a straw containing an RFID tag according to an embodiment of the present invention.

Figure 2 shows the complex permeability (real part noted as $\mu'_s$ and imaginary part noted as $\mu''_s$) versus frequency of ferrite core materials based on MnZn (left) and NiZn (right).

Figure 3 shows typical dependence on temperature of antennas built with a MnZn-based material and with a NiZn-based material.

Figure 4 shows the dependence of $\mu_{rod}$ on the length-to-diameter ratio for a MnZn-based material.

Figure 5 shows the dependence on temperature of inductances having different length-to-diameter ratio, given a same material grade. The inductance variation in Y axis is shown as percentage deviation of the inductance value at a certain temperature compared to the inductance value at 25°C. The material grade in this example is material 52 from Fair-Rite; this is a NiZn based material. The selection of the manufacturer is just for illustration purposes, similar material grades with similar properties are available from other manufacturers than Fair-Rite.

Figure 6 shows the shifting of an annular coil along a ferrite core in order to change the inductance value.

Figure 7 shows a chip in die format having bumped pads according to a possible embodiment of the invention.

Figure 8 shows a complete system for cryo-preservation, including goblets, canisters and Dewar container according to a possible embodiment of the present invention.

Figure 9 shows an RFID tag fitted inside a straw and sealed, according to a possible embodiment of the present invention.

## DESCRIPTION OF A WAY OF CARRYING OUT THE INVENTION

In this text, the term "comprises" and its derivations (such as "comprising", etc.) should not be understood in an excluding sense, that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially".

In the context of the present invention, the terms *chip* and *tag* are not interchangeable. In this text, the *chip* refers to the integrated circuit chip, which is comprised in the *tag.* The tag comprises additional elements, such as an antenna and a carrier to hold both the antenna and the chip.

The following description is not to be taken in a limiting sense but is given solely for the purpose of describing the broad principles of the invention. Next embodiments of the invention will be described by way of example, with reference to the above-mentioned drawings showing apparatuses and results according to the invention.

The current invention serves to electronically identify thin biological vessels (such as straws, small vials, and others) kept at cryogenic conditions and having a small diameter (or equivalent dimension when the vessel is not cylindrical), even down to approximately 1.4 mm. The RFID tag is designed to fit inside one of such vessels. The inner diameter of conventional straws is around 2.4 mm, the diameter for "open-pulled straws" is 1.4 mm, while the minimum diameter of conventional vials is around 3.6 mm. Thus, the maximum dimension of the section of a tag intended to fit inside a thin vessel, such as a straw, is around 1.4mm. These vessels are normally placed in containers of several units (for example, straws are normally placed in goblets containing around 200 straws, and vials are normally placed in boxes of around 100 units). The RFID tag permits to identify all the tags inside the specific container (goblet or box) in which they are placed. Because of the existence of multiple RFID tags inside the same container, an anti-collision protocol is necessary.

The proposed solution eliminates the need for the vessels to be taken out of the storage medium in order to verify their identity. Stock checks on a multitude of samples may be performed in a very short time interval. It also allows to determine faster and more reliably the vessel to be extracted, minimizing the risk of heating and spoiling the sample.

The RFID tag is designed to be operative in the complete temperature range from ambient temperatures down to cryogenic temperatures, such as in liquid nitrogen. In particular, the RFID tag is designed to be operative in the complete temperature range from ambient temperatures down to -200ºC. In order for the RFID tag to be operative at such temperatures, a chip which is fully operative at such temperature is required. Most commercial chips are designed to operate at minimum temperatures of around - 40°C. This means that conventional chips are not guaranteed to correctly operate at temperatures lower than -40ºC. The inventors have tested a wide number of chips and have observed that very few of them operate correctly at temperatures under -40ºC. Therefore either one of the few commercial chips which are functional at temperatures down to -200ºC is selected or a custom chip satisfying this condition is developed.

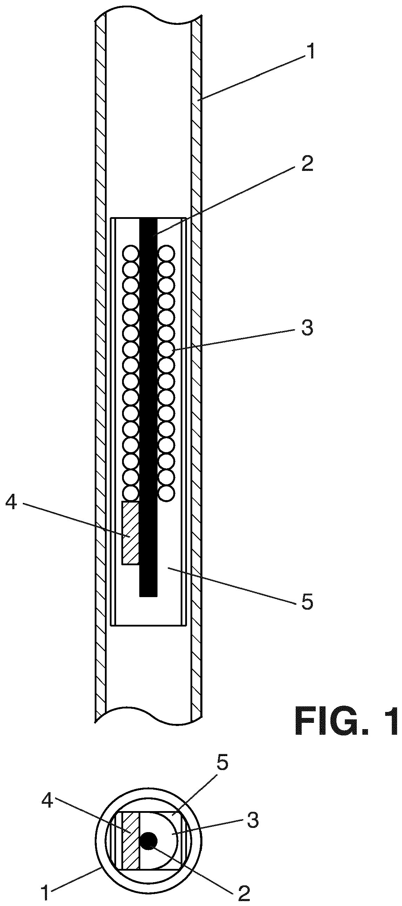

With reference to figure 1, a straw 1 containing an RFID tag is shown. The RFID tag comprises an antenna, an integrated circuit chip (or simply chip) coupled to said antenna and a carrier to hold both antenna and chip. The schematic drawing of figure 1 shows a RFID tag placed within a straw 1. In use, the straw 1 stores a biological sample at cryogenic temperatures. The shown RFID tag needs means to communicate with a reader (not shown). The RFID tag comprises a chip 4, an antenna 2 3 and a carrier 5 which holds the chip 4 and antenna. It also comprises a non-volatile memory, containing the unique identifier of the tag. The chip can also comprise another non-volatile memory which can store information about the biologic sample.

In a particular embodiment, the carrier 5 is a polymeric material molded around the antenna 2 3 and the chip 4. Polymeric materials can be for example thermoplastic materials, epoxy resins or polyurethane. The choice of the specific polymeric material is determined by the mechanical properties of the material, which must be able to withstand the thermal gradients generated by operation in liquid nitrogen. For instance, epoxy resins have been successfully validated. In an alternative embodiment, it is made of a glass material containing or encapsulating the antenna 2 3 and the chip 4.

In a preferred embodiment, the RFID tag operates in the frequency band of 13.56 MHz. Tags operating at 13.56 MHz are based on magnetic coupling. Therefore, the antenna is an inductor built as a coil. Such coils are built when a conductor is wound around a core. In figure 1, the antenna is formed by an annular coil 3 which surrounds a core 2. The core 2 can be air or ferrite. The properties of the antenna 2 3 vary depending on whether the core 2 is air or ferrite.

In a preferred embodiment, the core 2 is a ferrite core, contrary to the current practice: Most conventional antennas operating at 13.56 MHz are built using air core coils, for example printed on a plastic material. The severe restrictions in the dimensions of the RFID tag (its diameter or equivalent dimension if not circular cannot be more than around 1.4mm in order for the tag to fit inside thin vessels, such as straws) make the ferrite core to be a most preferred election. Ferrites are chemical compounds formed by ceramic materials with iron(III) oxide ($Fe_2O_3$) as their principal component.

Thus, going back to figure 1, each RFID tag is made up of a chip 4 connected to an antenna. The antenna is built by an annular coil 3 wounded around a ferrite core 2. The carrier 5 contains both the antenna 2 3 and the chip 4.

Ferrite core coils preferably use soft ferrites. A man skilled in the art knows that ferrites that are used in electromagnetic cores contain nickel, zinc and/or manganese compounds. They have a low coercivity and are called soft ferrites. The most common soft ferrites are manganese-zinc ferrite (MnZn) and nickel-zinc ferrite (NiZn), in different grades depending on the chemical composition or the manufacturing techniques. Different grades in the same material result in different properties.

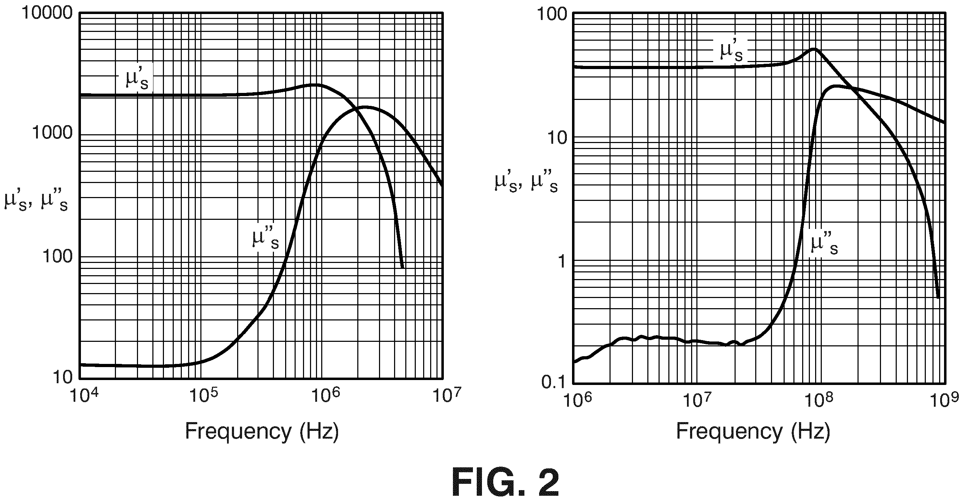

Materials for ferrite cores are often primarily selected by the frequency of the target application. Generally, and in spite of the different properties of different material grades, ferrite cores made of MnZn are used for low frequency applications (<200kHz), while ferrite cores made of NiZn are used for higher frequency applications (>200kHz). As shown in figure 2, operating MnZn ferrite cores at frequencies above 200 kHz results in an increase in the complex permeability of the ferrite core material, which in turn results in a low quality-factor for the antenna. Thus ferrite cores made of NiZn are in principle preferred for operation at 13.56 MHz.

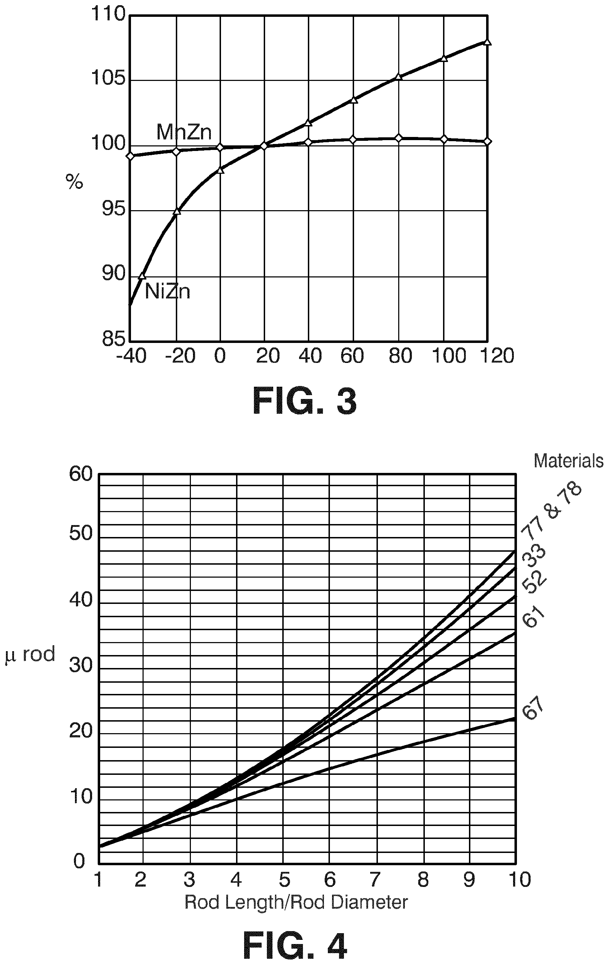

Nevertheless, the inductance of antennas built using NiZn ferrite cores varies significantly with temperature, as shown in figure 3 (typical change in inductance versus temperature), causing frequency detuning and non-operation of the tag at cryogenic temperatures.

Ferrite cores having a thin straight form are known as ferrite rods. The name ferrite rod is often used in the literature for this specific shape of the ferrite core.

It is possible to calculate the inductance of a ferrite core coil using the equation below (assuming that the length of the core covered by windings)

$$L = \mu_0 \mu_{rod} \frac{N^2 A}{l} 10^4 (\mu H)$$

where $\mu_0$ is the vacuum permeability, $\mu_{rod}$ is a factor which depends on the material grade and the geometry of the core (see for example figure 4, wherein ferrite rod permeability versus ferrite rod length divided by ferrite rod diameter is shown, for different material grades), N is the number of turns, A is the cross sectional area of the core and l is the length of the core.

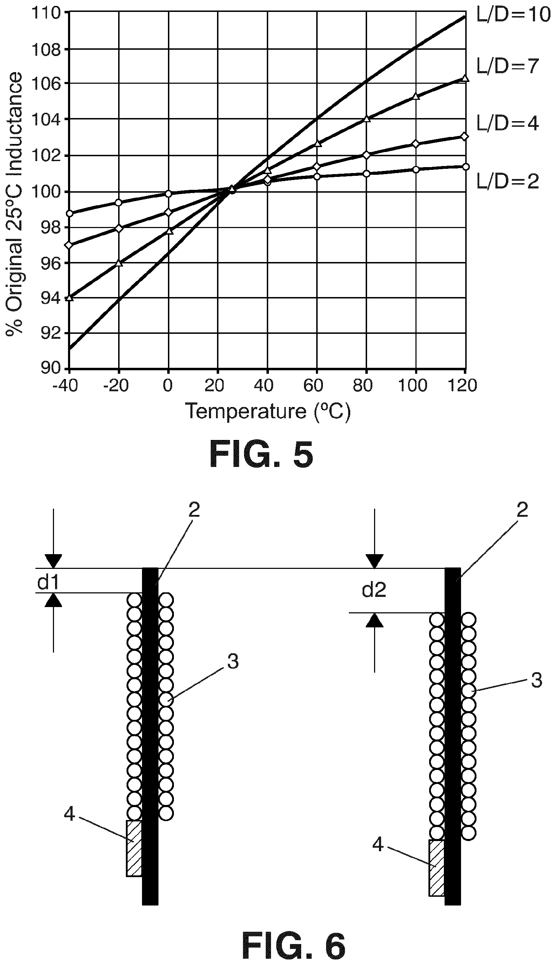

It is possible to reduce said dependence on temperature by changing the geometry of the ferrite core, in particular by reducing the length-to-diameter ratio, as shown in figure 5 (for instance, this figure corresponds to material 58 from Fair-Rite, a NiZn based material).

Reducing the length-to-diameter ratio of a NiZn material allows reducing temperature dependence. Nevertheless, given that the maximum diameter is limited due to the condition to fit inside thin vessels, the length which allows reducing temperature variations is too short to manufacture a coil of the desired value, which for applications operating in the 13.56MHz band lies in the range of few $\mu H$.

As shown in figure 3, for the same length-to-diameter ratio, inductors built with MnZn ferrite cores show significantly better temperature behavior than inductors built with NiZn ferrite cores. It is therefore possible to find length-to-diameter ratios which allow to manufacture the ferrite rod and to achieve good temperature stability. For instance, considering the geometrical constraints imposed by the necessity to fit inside vessels and the restriction in the maximum diameter, 10 is a suitable length-to-diameter ratio for an RFID antenna fitting inside thin vessels. This geometry allows to build an inductor using MnZn ferrite core and having an inductance in the range of $\mu H$. In particular, a ferrite core built with material grade 78 (a MnZn based material) from Fair-Rite and a length-to-diameter ratio of 10 has been tested to provide substantially stable inductance for the complete temperature range. Similar material grades from other ferrite core manufacturers can be used as well. However, inductors built with MnZn ferrite cores show lower quality-factor value than inductors based on other cores, due to the high complex permeability at 13.56 MHz. The resulting quality factor of an antenna built with MnZn ferrite cores at 13.56 MHz is low, resulting in shorter reading distance at ambient temperature compared to what is obtained using NiZn ferrite cores. Nevertheless, this disadvantage is compensated by the fact of having a stable reading range in the complete temperature range, enabling reading down to -200°C, As a consequence, MnZn ferrite cores have been proved to respond better than NiZn to obtain a tag which fits inside thin vessels and is operative in the complete temperature range down to -200°C.

As explained above, the ability to read at temperatures down to -200°C is obtained at the expense of reducing the reading distance at ambient temperature compared to other ferrite cores. If this reduction in distance was too big, the product might not be compatible to many RFID readers existing in the market. In order to maximize the reading distance at ambient temperature to enable compatibility with existing RFID readers, it is important to center the frequency at 13.56 MHz at ambient temperature. Due to different phenomena related to the manufacturing process of the building materials (such as dispersion in the permeability of the ferrite core material, dispersion in the dimensions of the ferrite coil, ...), and related to the assembly process (difference in the windings, ...), among others, the inductance and therefore the resonant frequency of the RFID tag deviates from the expected value at ambient temperature. Additional to this deviation and in spite of the relative small variation of inductance with temperature, further detuning of the resonant frequency with temperature is expected. The addition of both effects coming from process and coming from temperature might result in excessive detuning and in non-readings at some part of the whole temperature range (for instance, it might read at ambient temperature but not read at temperatures close to -200ºC or vice versa). Even if the low quality-factor results in good tolerance to deviations from the central frequency, it is important to minimize the frequency deviation due to process, so that frequency deviations due to temperature do not result in non-reading events.

Annular coils 3 placed at different locations measured from the edge of the ferrite core 2 result in a different inductance value. In other words, the same winding length results in a different inductance depending on the position of the annular coil. Figure 6 shows an example illustrating two different deployments of the annular coil 3 in two similar ferrite cores 2. Both deployments have the same winding length, but the resulting inductance value is different in each case. On the left, the annular coil 3 is placed at a distance d1 from the edge of the ferrite core 2, while on the right the annular coil 3 is placed at a distance d2 from the edge of the ferrite core 2. Frequency tuning can be made by shifting the location of the annular coil 3 along the axis of the ferrite core 2 as part of the production process, after assembly of chip 4 and antenna 2 3 and before encapsulation in the carrier 5. Once the annular coil 3 is in the right position it is attached to the ferrite core 2, for instance gluing it. The purpose of this attachment is to avoid shifting during the later manufacturing step (encapsulating in the carrier 5). Once the carrier 5 is fixed, the coil 3 cannot move any more. The optimum position of the coil 3 can be identified by measuring the resonant frequency of the tag, or by identifying the maximum value of a voltage received by a receiver tank tuned to the target frequency, for example 13.56 MHz.

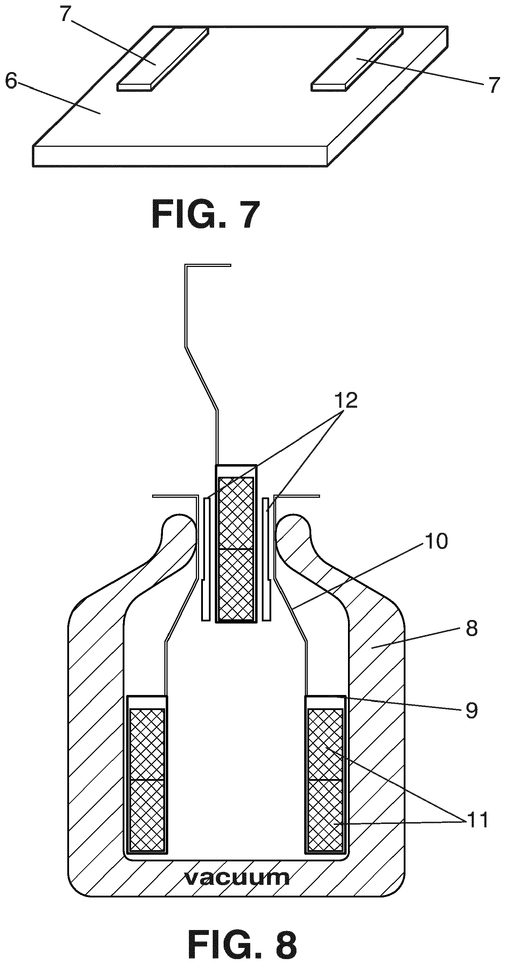

In order to minimize the size of the RFID tag, the RFID chip is preferably in die format, that is to say, the chip is directly taken from a wafer (for example, a silica wafer). without being further encapsulated. If the RFID chip is in die format, it preferably has bumped pads of a size which allows direct soldering of the antenna to the pads. Figure 7 illustrates a chip in die format 6 with grown bumped pads 7. If used in the embodiment shown in figure 1, the bumped pads terminals 7 of the chip 6 (chip 4 in figure 1) are used to solder the antenna 2 3. Selecting a chip in die format allows to keep the space inside the vessel (for instance, straw) at a minimum, making the filling using vacuum techniques easier. Some commercial chips for RFID applications are already delivered with bumped pads. Otherwise, it is also possible to build the bumps as post-processing to commercial chips. It is also possible to build the bumped pads in custom designed chips.

The preferred shape for the carrier 5 is a prism (for example, rectangular or triangular) rather than cylindrical. The inventors have observed that, using a carrier 5 in the form of a prism permits the RFID tag to be correctly fitted within the vessel, without preventing the vessel to be filled using vacuum techniques, as air can flow along the inner space of the vessel towards the upper and lower ends of the vessel. For example, if the vessel is a straw (thus having cylindrical shape) and the RFID is also cylindrical, the area occupied by the RFID tag is a bigger percentage of the inner area of the straw. Considering the shape of the chip (prism shape, normally squared or rectangular), and considering that the thickness of the chip (both on die format or encapsulated) is much smaller than the diameter of the coil, rectangular or triangular shape results in smaller section compared to circular shape, allowing vacuum filling to be possible.

The RFID tag described in this invention can be placed inside one of the straws, vials or any other vessels which form a plurality of respective straws, vials or vessels stored in containers (goblets or boxes), thus identifying the biological sample to which the RFID is attached. Anti-collision protocol is therefore necessary.

The RFID identification system comprises an interrogator unit (also called reader unit), which is able to wirelessly exchange information with the individual RFID tags. This reader unit or reading means comprises an antenna.

The reasons for choosing a tag which operates at 13.56 MHz are recited next. The inventors have observed that using tags which operate at 13.56 MHz, the presence of liquid nitrogen does not significantly affect the distance at which the RFID tag can be read. The Dewar containers and cabinets are metallic, and in consequence the proximity of metal can damage the identification. The inventors have overcome this problem (the proximity to metal) by placing the reader unit antenna a few centimeters away from any metallic part, or by designing the reader antenna on purpose to operate close to metallic parts. For instance, a particular embodiment of the invention is shown in figure 8. A Dewar 8 contains a certain number of canisters 9, each of them containing a plurality of goblets 11 (for instance, two). Each goblet contains a plurality of straws, each of them containing an RFID tag. A reader antenna 12 is placed in the middle of the Dewar separated from the metallic walls. The canisters are lifted using a handle 10, and the tags are read as the canister (and goblet) is shifted along the reader antenna.

Finally, it has been proved that medical applications, for instance for identification of blood bags, have been correctly running in this frequency. Tags operating according to standard ISO15693 Mode 1 offer an anti-collision protocol which can identify hundreds of tags in few seconds, as required by the application.

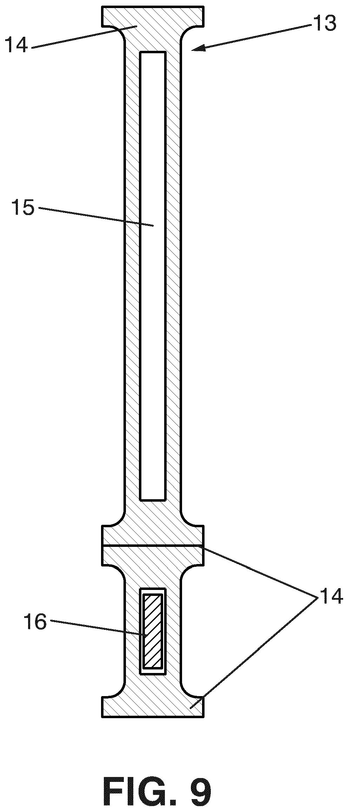

Furthermore, the invention allows unique identification of the biological sample inside the straw, since the tag is kept inside the straw once it is sealed. In a possible embodiment shown in figure 9, a straw 13 is thermo-sealed at positions 14, creating two cavities. The first cavity 15 contains the biological material, while the second cavity 16 contains the RFID tag. In this way, the identifying tag cannot be separated from the biological material unless the straw is broken.

This invention allows to hold the RFID tag inside a vessel, in this way not increasing the material thickness between biological sample and liquid nitrogen and without modifying the heat transfer, therefore not interfering in cryogenic process (even if it is as fast as, for instance, vitrification).

In summary, the proposed solution is an RFID tag, which can operate in the whole temperature range from ambient temperature down to-200ºC. If the vessel is a straw, the tag is placed and sealed inside the straw, so that the tag is attached to the sample to be identified. It is therefore impossible to separate the identifier from the sample without breaking the vessel.

Next, the procedure of reading the tags is described. It is described for a particular situation in which a plurality of straws are located within a goblet. A skilled person will understand that this example applies, mutatis mutandis, to a different configuration of vessels. Reading the tags can be done using a conventional reader (also called interrogating unit).The reader is able to wirelessly exchange information with the individual RFID tags. Individual RFID tags comprise means to communicate with the reader and a non-volatile memory containing the unique identifier of the tag. A conventional reader is connected to a customized antenna, which in a particular embodiment has a shape such that surrounds the goblet where the straws are located.

The antenna is lowered in the container with liquid nitrogen, and the goblet containing the straw to be identified is placed inside the antenna. By means of generating a magnetic field, the antenna activates the RFID chips and receives the identification information. The reader needs to use some anti-collision protocol. RFID communication standards, such as ISO15693 Mode 1 provides a suitable anti-collision protocol. This protocol allows both to perform an inventory and to ensure that a certain tag is present inside the container.

As one skilled in the art will understand, a different antenna and configuration of the same can be used, obtaining a similar functionality. For example, a long antenna placed in parallel with the goblet, without containing it.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A radio-frequency identification tag for identification of cryo-preserved samples down to cryogenic temperatures, comprising an antenna (2, 3) and an integrated circuit chip (4) designed to be operative at cryogenic temperatures, wherein said antenna (2, 3) is formed by a coil (3) wound around a ferrite core (2), the radio-frequency identification tag being **characterized in that** it is configured to fit within a vessel having a dimension down to 1.4mm,
   the radio-frequency identification tag further comprising a carrier (5) for holding said antenna (2, 3) and said integrated circuit chip (4),
   wherein the operating frequency of the radio-frequency identification tag is tunable by shifting the location of the coil (3) along the axis of said ferrite core (2), after assembly of the chip (4) and the antenna (2, 3) and before encapsulation in the carrier (5), until either its resonant frequency substantially matches up with a target resonant frequency or the energy received at a receiving means tuned to a target frequency is maximized, followed by attaching the coil (3) to the ferrite core (2).

2. The radio-frequency identification tag of claim 1, wherein said carrier (5) is a polymeric material molded around the antenna (2, 3) and the integrated circuit chip (4).

3. The radio-frequency identification tag of claim 1, wherein said carrier (5) is made of a glass material configured to encapsulate the antenna (2, 3) and the integrated circuit chip (4).

4. The radio-frequency identification tag of any of claims 1-3, wherein said carrier (5) has the shape of a prism.

5. The radio-frequency identification tag of any preceding claim, wherein said tag is configured to operate in the frequency band of 13.56 MHz.

6. The radio-frequency identification tag of any preceding claim, wherein said ferrite core (2) is based on a MnZn material.

7. The radio-frequency identification tag of any preceding claim, wherein said integrated circuit chip (4) is in die format (6).

8. The radio-frequency identification tag of any preceding claim, wherein said integrated circuit chip (4) comprises a plurality of bumped pads (7), each of said bumped pads (7) having a size which allows direct soldering of the antenna (2, 3) to the pads.

9. The radio-frequency identification tag of any preceding claim, further comprising means to implement an anti-collision protocol configured to enable a receiving means to discriminate between a plurality of discrete radio-frequency identification tags.

10. The radio-frequency identification tag of any preceding claim, which is configured to operate at temperatures down to -200ºC.

11. A system for identification of cryo-preserved samples at cryogenic temperatures **characterized by**:

- a plurality of vessels for containing samples, each vessel having in its inside a radio-frequency identification tag according to any preceding claim;
- means to activate said radio-frequency identification tags kept within said vessels;
- receiving means to identify signals from said radio-frequency identification tags, comprising an anti-collision protocol to enable said receiving means to discriminate between discrete vessels.

12. The system of claim 11, wherein each of said vessels has a diameter down to 1.4mm.

13. The system of claim 11, wherein said vessels are straws.

14. A method of tuning a radio-frequency identification tag for identification of a cryo-preserved sample stored in a vessel at cryogenic temperatures, wherein said radio-frequency identification tag in turn comprises an integrated circuit chip (4) designed to be operative at cryogenic temperatures and an antenna formed by a coil (3) wound around a ferrite core (2), the radio-frequency identification tag further comprising a carrier (5) for holding said antenna (2, 3) and said integrated circuit chip (4), the method being **characterized by** shifting the location of the coil (3) along the axis of said ferrite core (2), after assembly of chip (4) and antenna (2, 3) and before encapsulation in the carrier (5) until either its resonant frequency substantially matches up with a target resonant frequency or the energy received at a receiving means tuned to a target frequency is maximized, followed by attaching the coil (3) to the ferrite core (2).

**Patentansprüche**

1. Radiofrequenz-Identifikations-Etikett zum Identifizieren von kryokonservierten Proben bis hinunter auf Tieftemperaturen, umfassend eine Antenne (2, 3) und einen integrierten Schaltkreis (4), die für den Betrieb bei Tieftemperaturen eingerichtet sind, wobei die Antenne (2, 3) durch eine um einen Eisenkern (2) gewundene Spule (3) gebildet ist, wobei das Radiofrequenz-Identifikations-Etikett **dadurch gekennzeichnet ist, dass** es dazu eingerichtet ist, in ein Gefäß mit einer Abmessung von bis hinunter auf 1,4 mm zu passen, wobei das Radiofrequenz-Identifikations-Etikett ferner einen Träger (5) zum Halten der Antenne (2, 3) und des integrierten Schaltkreises (4) umfasst, wobei die Betriebsfrequenz des Radiofrequenz-Identifikations-Etiketts eingestellt werden kann durch Verschieben der Spule (3) entlang der Achse des Eisenkerns (2) nach Zusammenbau des Schaltkreises (4) und der Antenne (2, 3) und vor Einkapseln in den Träger (5), bis entweder seine Eigenfrequenz im Wesentlichen mit einer Solleigenfrequenz übereinstimmt oder die an einem auf eine Sollfrequenz gestimmten Empfangsmittel empfangene Energie maximiert wird, wonach die Spule (3) am Eisenkern (2) befestigt wird.

2. Radiofrequenz-Identifikations-Etikett nach Anspruch 1, wobei der Träger (5) ein um die Antenne (2, 3) und den integrierten Schaltkreis (4) geformtes Polymermaterial ist.

3. Radiofrequenz-Identifikations-Etikett nach Anspruch 1, wobei der Träger (5) aus einem Glasmaterial hergestellt ist, das dazu eingerichtet ist, die Antenne (2, 3) und den integrierten Schaltkreis (4) einzukapseln.

4. Radiofrequenz-Identifikations-Etikett nach einem der Ansprüche 1-3, wobei der Träger (5) prismenförmig ist.

5. Radiofrequenz-Identifikations-Etikett nach einem der vorhergehenden Ansprüche, wobei das Etikett zum Betrieb im Frequenzband von 13,56 MHz eingerichtet ist.

6. Radiofrequenz-Identifikations-Etikett nach einem der vorhergehenden Ansprüche, wobei der Eisenkern (2) auf einem MnZn-Material basiert.

7. Radiofrequenz-Identifikations-Etikett nach einem der vorhergehenden Ansprüche, wobei der Schaltkreis (4) im Die-Format (6) ist.

8. Radiofrequenz-Identifikations-Etikett nach einem der vorhergehenden Ansprüche, wobei der Schaltkreis (4) eine Vielzahl von erhöhten Kontaktstellen (7) umfasst, wobei jede der Kontaktstellen (7) eine Größe aufweist, die das direkte Anlöten der Antenne (2, 3) an die Kontaktstellen ermöglicht.

9. Radiofrequenz-Identifikations-Etikett nach einem der vorhergehenden Ansprüche, ferner Mittel zum Umsetzen eines Antikollisionsprotokolls umfassend, das eingerichtet ist, einem Empfangsmittel das Unterscheiden einer Vielzahl diskreter Radiofrequenz-Identifikations-Etiketten zu ermöglichen.

10. Radiofrequenz-Identifikations-Etikett nach einem der vorhergehenden Ansprüche, das zum Betrieb bei Temperaturen bis hinunter auf -200 °C eingerichtet ist.

11. System zum Identifizieren von kryokonservierten Proben bei Tieftemperaturen, **gekennzeichnet durch**:

    - eine Vielzahl von Gefäßen zum Aufnehmen von Proben, wobei jedes Gefäß auf seiner Innenseite ein Radiofrequenz-Identifikations-Etikett nach einem der vorhergehenden Ansprüche aufweist;
    - Mittel zum Aktivieren der in den Gefäßen enthaltenen Radiofrequenz-Identifikations-Etiketten; - Empfangsmittel zum Identifizieren von Signalen von den Radiofrequenz-Identifikations-Etiketten, ein Antikollisionsprotokoll umfassend, um es dem Empfangsmittel zu ermöglichen, einzelne Gefäße zu unterscheiden.

12. System nach Anspruch 11, wobei jedes der Gefäße einen Durchmesser von bis hinunter auf 1,4 mm hat.

13. System nach Anspruch 11, wobei die Gefäße Halme sind.

14. Verfahren des Einstellens der Frequenz eines Radiofrequenz-Identifikations-Etiketts zum Identifizieren einer kryokonservierten Probe, die bei Tieftemperaturen in einem Gefäß aufbewahrt wird, wobei das Radiofrequenz-Identifikations-Etikett wiederum einen für den Betrieb bei Tieftemperaturen eingerichteten integrierten Schaltkreis (4) und eine durch Wickeln einer Spule (3) um einen Eisenkern (2) gebildete Antenne umfasst, wobei das Radiofrequenz-Identifikations-Etikett ferner einen Träger (5) zum Halten der Antenne (2, 3) und des integrierten Schaltkreises (4) umfasst, wobei das Verfahren **gekennzeichnet ist durch** Verschieben der Spule (3) entlang der Achse des Eisenkerns (2) nach Zusammenbau des Schaltkreises (4) und der Antenne (2, 3) und vor Einkapseln im Träger (5), bis entweder seine Eigenfrequenz im Wesentlichen mit einer Solleigenfrequenz übereinstimmt oder die an einem auf eine Sollfrequenz gestimmten Empfangsmittel empfangene Energie maximiert wird, wonach die Spule (3) am Eisenkern (2) befestigt wird.

**Revendications**

1. Etiquette d'identification par radiofréquence pour identifier des échantillons cryo-conservés descendant jusqu'à des températures cryogéniques, comprenant une antenne (2, 3) et une puce de circuit intégré (4) conçue pour être opérationnelle à des températures cryogéniques, dans laquelle ladite antenne (2, 3) est formée d'une bobine (3) enroulée autour d'un noyau en ferrite (2), l'étiquette d'identification par radiofréquence étant **caractérisée en ce qu'**elle est configurée pour s'intégrer au sein d'un récipient ayant une dimension pouvant être de 1,4 mm,
l'étiquette d'identification par radiofréquence comprenant en outre un support (5) pour contenir ladite antenne (2, 3) et ladite puce de circuit intégré (4),
dans laquelle la fréquence de fonctionnement de l'étiquette d'identification par radiofréquence est modifiable en décalant l'emplacement de la bobine (3) selon l'axe dudit noyau en ferrite (2), après assemblage de la puce (4) et de l'antenne (2, 3) et avant encapsulation dans le support (5), jusqu'à ce que soit sa fréquence de résonance concorde sensiblement avec une fréquence de résonance cible soit que l'énergie reçue au niveau d'un moyen de réception réglé à une fréquence cible soit maximisée, suivi de la fixation de la bobine (3) au noyau en ferrite (2).

2. Etiquette d'identification par radiofréquence selon la revendication 1, dans laquelle ledit support (5) est un matériau polymérique moulé autour de l'antenne (2, 3) et de la puce de circuit intégré (4).

3. Etiquette d'identification par radiofréquence selon la revendication 1, dans laquelle ledit support (5) est réalisé en un matériau en verre configuré pour encapsuler l'antenne (2, 3) et la puce de circuit intégré (4).

4. Etiquette d'identification par radiofréquence selon l'une quelconque des revendications 1 à 3, dans laquelle ledit support (5) a la forme d'un prisme.

5. Etiquette d'identification par radiofréquence selon une quelconque revendication précédente, dans laquelle ladite étiquette est configurée pour fonctionner dans la bande de fréquence de 13,56 MHz.

6. Etiquette d'identification par radiofréquence selon une quelconque revendication précédente, dans laquelle ledit noyau en ferrite (2) est à base d'un matériau en MnZn.

7. Etiquette d'identification par radiofréquence selon une quelconque revendication précédente, dans laquelle ladite puce de circuit intégré (4) a un format de dé (6).

8. Etiquette d'identification par radiofréquence selon une quelconque revendication précédente, dans laquelle ladite puce de circuit intégré (4) comprend une pluralité de languettes en saillie (7), chacune desdites languettes en saillie (7) ayant une taille qui permet un brasage direct de l'antenne (2, 3) aux languettes.

9. Etiquette d'identification par radiofréquence selon une quelconque revendication précédente, comprenant en outre un moyen pour implémenter un protocole anticollision configuré pour permettre à des moyens de réception de faire la distinction entre une pluralité d'étiquettes d'identification par radiofréquence discrètes.

10. Etiquette d'identification par radiofréquence selon une quelconque revendication précédente, qui est configurée pour fonctionner à des températures descendant jusqu'à -200 °C.

11. Système pour l'identification d'échantillons cryo-conservés à des températures cryogéniques, **caractérisé par** :

> - une pluralité de récipients pour contenir des échantillons, chaque récipient contenant une étiquette d'identification par radiofréquence selon une quelconque revendication précédente ;
> - des moyens pour activer lesdites étiquettes d'identification par radiofréquence conservées au sein desdits récipients ;
> - des moyens de réception pour identifier des signaux provenant desdites étiquettes d'identification par radiofréquence, comprenant un protocole anticollision pour permettre auxdits moyens de réception de faire la distinction entre des récipients discrets.

12. Système selon la revendication 11, dans lequel chacun desdits récipients a un diamètre pouvant être de 1,4 mm.

13. Système selon la revendication 11, dans lequel lesdits récipients sont des pailles.

14. Procédé de réglage d'une étiquette d'identification par radiofréquence pour identifier un échantillon cryo-conservé stocké dans un récipient à des températures cryogéniques, dans lequel ladite étiquette d'identification par radiofréquence comprend quant à elle une puce de circuit intégré (4) conçue pour être opérationnelle à des températures cryogéniques et une antenne formée d'une bobine (3) enroulée autour d'un noyau en ferrite (2), l'étiquette d'identification par radiofréquence comprenant en outre un support (5) pour contenir ladite antenne (2, 3) et ladite puce de circuit intégré (4), le procédé étant **caractérisé par** le décalage de l'emplacement de la bobine (3) selon l'axe dudit noyau en ferrite (2), après assemblage de la puce (4) et de l'antenne (2, 3) et avant encapsulation dans le support (5) jusqu'à ce que soit sa fréquence de résonance concorde sensiblement avec une fréquence de résonance cible soit que l'énergie reçue au niveau d'un moyen de réception réglé à une fréquence cible soit maximisée, suivi de la fixation de la bobine (3) au noyau en ferrite (2).

FIG. 1

**FIG. 2**

**FIG. 3**

**FIG. 4**

**FIG. 5**

**FIG. 6**

**FIG. 7**

vacuum

**FIG. 8**

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5545562 A
- US 5283170 A
- EP 2315163 A1
- US 20070075141 A
- US 2005247782 A1
- WO 2008065127 A2